# EUROPÄISCHE PATENTSCHRIFT

(11) **EP 1 141 066 B1**
(45) Veröffentlichungstag und Bekanntmachung des Hinweises auf die Patenterteilung: **27.10.2004**
(21) Anmeldenummer: 99966915.3
(22) Anmeldetag: 06.12.1999
(51) Int. Cl.: C08G 18/62, C09D 175/04, C08G 18/08, C08G 18/28

(54) **WÄSSRIGE 2K-PUR-SYSTEME MIT ERHÖHTER SCHLAGZÄHIGKEIT UND GUTEN BESTÄNDIGKEITSEIGENSCHAFTEN, EIN VERFAHREN ZU DEREN HERSTELLUNG UND DEREN VERWENDUNG**
AQUEOUS TWO-COMPONENT POLYURETHANE SYSTEMS WITH INCREASED IMPACT RESISTANCE AND GOOD STABILITY PROPERTIES, METHOD FOR PRODUCING SAME AND THEIR USE
SYSTEMES DE POLYURETHANNE AQUEUX A 2 COMPOSANTES AYANT UNE HAUTE RESISTANCE AUX CHOCS ET DE BONNES PROPRIETES DE RESISTANCE, LEUR PROCEDE DE PRODUCTION ET LEUR UTILISATION

(30) Priorität: 18.12.1998 DE 19858733
(43) Veröffentlichungstag der Anmeldung: 10.10.2001
(73) Patentinhaber: Bayer MaterialScience AG, 51368 Leverkusen (DE)
(72) Erfinder: PROBST, Joachim, D-51375 Leverkusen (DE); BISKUP, Ulrich, D-51375 Leverkusen (DE); KOBUSCH, Claus, D-40667 Meerbusch (DE)
(86) Internationale Anmeldenummer: PCT/EP1999/009523
(87) Internationale Veröffentlichungsnummer: WO 2000/037522

(56) Entgegenhaltungen:
- EP-A- 0 557 844
- EP-A- 0 842 991
- US-A- 5 670 600

## Beschreibung

Die Erfindung betrifft wäßrige Zweikomponenten-Polyurethan-Systeme, ein Verfahren zu deren Herstellung und deren Verwendung zur Herstellung von Beschichtungen mit erhöhter Schlagzähigkeit bei guter Lösemittelbeständigkeit.

In der Oberflächen-Technologie spielen ökologische Fragen eine bedeutende Rolle. Ein besonders vordringliches Problem ist die Reduzierung der für Lacke und Beschichtungsstoffe verwendeten Mengen organischer Lösemittel.

Bei chemisch vemetzenden Polyurethanlacken, die aufgrund ihrer hervorragenden Eigenschaften auf dem Beschichtungssektor eine große Bedeutung haben, konnte bisher auf organische Lösungsmittel nicht verzichtet werden. Die Verwendung von Wasser anstelle von organischen Lösemitteln in Zweikomponenten-Polyurethanlacken auf Basis von Polyisocyanaten mit freien Isocyanatgruppen schien bislang nicht möglich, da bekannt ist, daß Isocyanatgruppen nicht nur mit alkoholischen Hydroxylgruppen, sondern auch mit Wasser reagieren. Außerdem ist natürlich die Konzentration an vom Wasser herrührenden aktiven Wasserstoffatomen in derartigen Systemen weit höher als die Konzentration an Hydroxylgruppen der organischen, NCO-reaktiven Komponente, so daß davon ausgegangen werden mußte, daß in dem ternären System Polyisocyanat/organische Polyhydroxyverbindung/Wasser vor allem eine Isocyanat-Wasser-Reaktion unter Harnstoff- und Kohlendioxidbildung abläuft, die einerseits nicht zur Vernetzung der organischen Polyhydroxyverbindungen und andererseits zur Schäumung des Lackansatzes aufgrund der Kohlendioxidbildung führt.

Aus der EP-A 358 979 ist bekannt, daß bei Verwendung von ausgewählten Polyhydroxylverbindungen auf Vinylpolymerisat-Basis als Reaktionspartner für organische Polyisocyanate mit freien Isocyanatgruppen wäßrige Zweikomponenten-Polyurethan-Systeme dadurch hergestellt werden können, daß man die Polyisocyanäte mit freien Isocyanatgruppen in der wäßrigen Polymerisatlösung bzw. -dispersion emulgiert. Die in der EP-A 0 358 979 beschriebenen Polyhydroxylverbindungen werden dabei vorzugsweise in organischer Lösung radikalisch polymerisiert und dann anschließend in die wäßrige Lösung eines Neutralisationsmittels - meist Ammoniak oder tertiäre Amine - überführt und wäßrig gelöst. Das organische Lösungsmittel kann dabei nach Bedarf im wäßrigen Milieu verbleiben oder destillativ entfernt werden.

Die auf diese Art hergestellten Polymerpolyole sind in ihrer Morphologie normalerweise einphasig, weisen also auch nach Vernetzung und Filmbildung mit geeigneten hydrophoben und/oder hydrophilierten Polyisocyanaten entweder thermoplastische oder elastomere Eigenschaften auf. Zur Herstellung von Polyurethan-Filmen mit den Eigenschaften eines thermoplastischen Elastomers, das sowohl ausgezeichnete Zähigkeitseigenschaften als auch ein hohes Festigkeitsniveau besitzt, ist ein einphasiger Aufbau eines solchen Polymerpolyols im allgemeinen nicht ausreichend.

EP-A 0 842 991 beschreibt wässrige Polyurethanbeschichtungen basierend auf einer silanmodifizierten, hydrophilen Polyisocyanatkomponente und zweiphasig aufgebauten Emulsionspolymerisaten mit einem gummiartigen Kern und einer harten Schale, welche sich als haftungsverbessernde Primer zur Beschichtung zahlreicher Substrate eignen. In wie weit sich derartige Systeme auch zur Herstellung von Beschichtungen mit verbesserter Härte und/oder Schlagzähigkeit eignen, ist der Offenbarung nicht zu entnehmen.

Es hat sich nun gezeigt, dass Polymerpolyolsysteme aufgebaut aus mindestens 2 chemisch miteinander nicht verknüpften Polymerisaten a1) und a2) mit geeigneten Polyisocyanaten zu Polyurethan-Beschichtungen mit hohem Zähigkeitsniveau insbesondere bei tiefen Temperaturen und hoher Härte führen.

Gegenstand der Erfindung sind daher Zweikomponenten-Polyurethanbeschichtungsmittel, welche als Bindemittelkomponente a) eine Polyolkomponente, bestehend aus mindestens zwei chemisch miteinander nicht verknüpften Polymerpolyolen, wobei die erste als eine elastische Komponente a1) in einer zweiten thermoplastischen Komponente a2) als diskrete Phase dispergiert vorliegt und b) eine Polyisocyanatkomponente mit einer Viskosität von höchstens 10.000 mPa.s enthalten, bestehend aus mindestens einem organischen Polyisocyanat in einem NCO/OH-Äquivalentverhältnis von 0,2:1 bis 5:1 entsprechenden Mengen, dadurch gekennzeichnet, daß die Komponente a) eine wäßrige Lösung und/oder Dispersion einer Mischung von mindestens zwei Vinylpolymerpolyolen der oben Art darstellt, und in der die Polyisocyanatkomponente b) emulgiert bzw. solubilisiert vorliegt.

Bei der Komponente a) handelt es sich um eine Polyolkomponente, die aus einer Mischung von mindestens zwei Polyolen a1) und a2) auf Vinylpolymerisat-Basis besteht. Die Polyole a1) und a2) sind vor der Vernetzung mit der Isocyanatkomponente b) chemisch nicht miteinander verknüpft.

Bei Polyol a1) handelt es sich um eine Elastomerkomponente, die Hydroxylgruppen, Sulfonat- und/oder Carboxylatgruppen, vorzugsweise Carboxylatgruppen und gegebenenfalls Sulfonsäure- und/oder Carboxylgruppen, vorzugsweise Carboxylgruppen enthält. Bei Komponente a1) handelt es sich um Polymerisate von olefinisch ungesättigten Monomeren, die vorzugsweise ein nach der Methode der Gelpermeationschromatographie bestimmbares Molekulargewicht Mn (Zahlenmittel) von 500 bis 500 000 g/mol, insbesondere 1 000 bis 200 000 g/mol (bezüglich der unvemetzten Anteile), eine Hydroxylzahl von 8 bis 264, vorzugsweise 16 bis 198 mg KOH/g Festharz, eine Säurezahl (bezogen auf die Summe der nichtneutralisierten und neutralisierten Säuregruppen) von 0 bis 100, vorzugsweise 3 bis 50 mg KOH/g Festharz aufweisen. Die Elastomerkomponente a1) weist eine Glastemperatur (gemessen mit der DSC- bzw. der DMA-Methode) von höchstens - 10°C auf.

Der Thermoplastbestandteil a2) ist ebenfalls ein Polyol, das Hydroxylgruppen, Sulfonat- und/oder Carboxylatgruppen, vorzugsweise Carboxylatgruppen und gegebenenfalls Sulfonsäure- und/oder Carboxylgruppen, vorzugsweise Carboxylgruppen enthält. Komponente a2) ist ebenfalls ein Polymerisat von olefinisch ungesättigten Monomeren, die vorzugsweise ein nach der Methode der Gelpermeationschromatographie bestimmbares Molekulargewicht Mn (Zahlenmittel) von 500 bis 500 000 g/mol, insbesondere 1 000 bis 200 000 g/mol (bezüglich der unvernetzten Anteile), eine Hydroxylzahl von 16 bis 264, vorzugsweise 33 bis 198 mg KOH/g Festharz, eine Säurezahl (bezogen auf die Summe der nichtneutralisierten und neutralisierten Säuregruppen) von 3 bis 100, vorzugsweise 5 bis 50 mg KOH/g Festharz aufweisen.

Die Thermoplastkomponente a2) weist eine Glastemperatur von mindestens +10°C auf.

Ganz besonders bevorzugt sind Elastomerkomponenten a1), die aus den folgenden Comonomerkomponenten aufgebaut sind:

| | | | |
|---|---|---|---|
| a1 | a) | 0,4-7,7 Gew.-% | Acrylsäure und/oder Methacrylsäure; |
| a1 | b) | 3,4-50,8Gew.-% | Acrylsäure-2-hydroxyethylester und/oder Acrylsäurehydroxypropylester und/oder Methacrylsäure-2-hydroxyethylester und/oder Methacrylsäurehydroxypropylester; |
| a1 | c) | 0-20 Gew.-% | Methacrylsäuremethylester und/oder Acrylnitril und/oder Methacrylnitril und/oder Styrol bzw. substituierte Styrole als Comonomere mit Festigkeit und Härte verleihendem Charakter; |
| a1 | d) | 70-96 Gew.-% | Methacrylsäurealkylester mit 2 bis 12 C-Atomen im Alkylrest und/oder Acrylsäurealkylester mit 1 bis 12 C-Atomen im Alkylrest als elastifizierende Komponenten; |
| a1 | e) | 0-5 Gew.-% | vernetzende Comonomere wie z.B. Divinylbenzol, Ethylenglykoldi(meth)acrylat, Propylenglykoldi(meth)acrylat, Butylenglykoldi(meth)acrylat, Allyl(meth)acrylat; |

wobei die Summe der Gew.-% von a1 a) bis a1 e) 100 ergibt und wobei die Glastemperatur unter -10°C liegt.

Ganz besonders bevorzugt sind Thermoplastkomponenten a2), die aus den folgenden Comonomerkomponenten aufgebaut sind:

| | | | |
|---|---|---|---|
| a2 | a) | 0,6-7,7 Gew.-% | Acrylsäure und/oder Methacrylsäure; |
| a2 | b) | 6,8-50,8 Gew.-% | Acrylsäure-2-hydroxyethylester und/oder Acrylsäurehydroxypropylester und/oder Methacrylsäure-2-hydroxyethylester und/oder Methacrylsäurehydroxypropylester; |
| a2 | c) | 30-80 Gew.-% | Methacrylsäuremethylester und/oder Acrylnitril und/oder Methacrylnitril und/oder Styrol bzw. substituierte Styrole als Comonomere mit Festigkeit und Härte verleihendem Charakter; |
| a2 | d) | 5-40 Gew.-% | Methacrylsäurealkylester mit 2 bis 12 C-Atomen im Alkylrest und/oder Acrylsäurealkylester mit 1 bis 12 C-Atomen im Alkylrest als elastifizierende Komponenten; |
| a2 | e) | 0-5 Gew.-% | vernetzende Comonomere wie z.B. Divinylbenzol, Ethylenglykoldi(meth)acrylat, Propylenglykoldi(meth)acrylat, Butylenglykoldi(meth)acrylat, Allyl(meth)acrylat, |

wobei die Summe der Gew.-% von a2 a) bis a2 e) 100 ergibt und wobei die Glastemperatur über +10°C liegt.

Bevorzugt werden die Elastomerkomponente a1) und die Thermoplastkomponente a2) in Gewichtsverhältnissen von 10:90 bis 60:40 (bezüglich Festharz) abgemischt.

Gegenstand der Erfindung ist auch ein Verfahren zur Herstellung eines Zweikomponenten-Polyurethanbeschichtungsmittels, welches als Bindemittelkomponente a) eine Polyolkomponente, bestehend aus mindestens zwei Polymerpolyolen, wobei die erste als eine elastische Komponente a1) in einer zweiten thermoplastischen Komponente a2) als diskrete Phase dispergiert vorliegt, und b) eine Polyisocyanatkomponente mit einer Viskosität von höchstens 10.000 mPa.s enthält, bestehend aus mindestens einem organischen Polyisocyanat in einem NCO/OH-Äquivalentverhältnis von 0,2:1 bis 5:1 entsprechenden Mengen, dadurch gekennzeichnet, daß die Komponente a) eine wäßrige Lösung und/oder Dispersion einer Mischung von mindestens zwei Vinylpolymerpolyolen der oben genannten Art darstellt, und in der die Polyisocyanatkomponente b) emulgiert bzw. solubilisiert vorliegt.

Die Herstellung der Hydroxylgruppen aufweisenden Polymerisatkomponente a1) und a2) erfolgt durch an sich bekannte Verfahren der radikalischen Polymerisation in organischer oder in wäßriger Phase. Bevorzugt erfolgt die Herstellung der Polymerisate durch das Verfahren der radikalischen Emulsionspolymerisation im wäßrigen Milieu.

Möglich sind kontinuierliche oder diskontinuierliche Polymerisationsverfahren. Von den kontinuierlichen Verfahren sind das Batch- und das Zulaufverfahren zu nennen, wobei letzteres bevorzugt ist. Bei dem Zulaufverfahren wird Wasser allein oder mit einem Teil eines anionischen Emulgators, gegebenenfalls unter Beimischung eines nichtionischen Emulgators, sowie mit einem Teil der Monomermischung vorgelegt, auf die Polymerisationstemperatur erwärmt, die Polymerisation im Fall einer Monomervorlage radikalisch gestartet und das restliche Monomergemisch zusammen mit einem Initiatorgemisch und dem Emulgator im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Die Hydroxylgruppen aufweisenden Polymerisate a1) und a2) können durch Dosierstrategien so hergestellt werden, daß Kern-Schale-Polymerisate entstehen (vergl. z.B.M.J. Devon et al., J. Appl. Polym. Sci. 39 (1990) S. 2119 - 2128). Hierbei kann der Kern z.B. hart und hydrophob und die Schale weich und hydrophil aufgebaut sein. Ein umgekehrter Aufbau mit weichem Kern und härterer Schale ist ebenfalls möglich.

Die hierbei eingesetzten Emulgatoren sind anionischer und/oder nichtionischer Natur. Von den Emulgatoren mit anionischer Natur sind solche mit Carboxylatgruppen, Sulfat-, Sulfonat-, Phosphat- oder Phosphonatgruppen einsetzbar. Bevorzugt sind Emulgatoren mit Sulfat-, Phosphat- oder Phosphonatgruppen. Die Emulgatoren können niedermolekular oder hochmolekular sein. Letztere werden z.B. in der DE-A 3 806 066 und DE-A 1 953 349 beschrieben.

Bevorzugt sind solche anionischen Emulgatoren, die mit Ammoniak oder Aminen neutralisiert worden sind. Besonders bevorzugt sind Emulgatoren, die aus langkettigen Alkoholen oder substituierten Phenolen sowie Ethylenoxidketten mit Polymerisationsgraden zwischen 2 und 100 und abschließender Monoschwefelsäureestergruppe bzw. Phosphorsäuremono- und -diestergruppen aufgebaut sind. Als Neutralisationsmittel dient hierbei im allgemeinen Ammoniak. Sie können dem Emulsionsansatz einzeln oder in beliebigen Mischungen zugesetzt werden.

Als nichtionogene Emulgatoren, die meist in Kombination mit den obengenannten anionischen Emulgatoren eingesetzt werden können, eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z.B. Ethylenoxid. Beispiele dafür sind Umsetzungsprodukte von Ethylenoxid mit Carbonsäuren wie z.B. Laurinsäure, Stearinsäure, Ölsäure, den Carbonsäuren des Ricinusöls, Abietinsäure, mit längerkettigen Alkoholen wie Oleylalkohol, Laurylalkohol, Stearylalkohol, mit Phenolderivaten wie z.B. sustituierten Benzyl-, Phenylphenolen, Nonylphenol und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50. Diese Emulgatoren werden in Mengen von 0,1 bis 10 Gew.-%, bezogen auf die Mischung der Monomeren, zugegeben.

Als gegebenenfalls mitzuverwendende Colösemittel kommen sowohl wasserlösliche als auch wasserunlösliche Lösungsmittel in Betracht. Als solche kommen beispielsweise Aromaten wie Benzol, Toluol, Xylol, Chlorbenzol, Ester wie Ethylacetat, Butylacetat, Etherester wie Methylglykolacetat, Ethylglykolacetat, Methoxypropylacetat, Methoxybutylacetat, Ether wie Butylglykol, Tetrahydrofuran, Dioxan, Ethylglykolether, Ether des Diglykols, Ether des Dipropylenglykols, Ketone wie Aceton, Methylethylketon, Methylisobutylketon, Trichlormonofluorethan, cyclische Amide wie N-Methylpyrrolidon oder N-Methylcaprolactam in Betracht.

Die durch Radikale initiierte Polymerisation kann durch wasserlösliche oder wasserunlösliche Initiatoren bzw. Initiatorsysteme ausgelöst werden, deren Halbwertszeiten des Radikalzerfalls bei Temperaturen von 10°C bis 100°C zwischen 0,01 und 400 min liegen. Im allgemeinen erfolgt die Polymerisation in wäßriger Emulsion im genannten Temperaturbereich, vorzugsweise zwischen 30 und 90°C, unter einem Druck von 10³ bis 2 x 10⁴ mbar, wobei sich die genaue Polymerisationstemperatur nach der Art des Initiators richtet. Die Initiatoren werden im allgemeinen in Mengen von 0,05 bis 6 Gew.-%, bezogen auf die Gesamtmenge an Monomeren, eingesetzt.

Geeignete Initiatoren sind z.B. wasserlösliche und -unlösliche Azoverbindungen wie Azoisobuttersäuredinitril oder 4,4'-Azo-bis-(4-cyanpentansäure) sowie anorganische und organische Peroxide wie z.B. Dibenzoylperoxid, t-Butylperpivalat, t-Butyl-per-2-ethylhexanoat, t-Butylperbenzoat, t-Butylhydroperoxid, Di-t-butylperoxid, Cumolhydroperoxid, Dicyclohexyl- und Dibenzylperoxydicarbonat sowie die Natrium-, Kalium- oder Ammoniumsalze der Peroxodischwefelsäure und Wasserstoffperoxid. Die Peroxodisulfate und Wasserstoffperoxide werden oft in Kombination mit Reduktionsmitteln wie z.B. dem Natriumsalz der Formamidinsulfinsäure (Rongalit C), Ascorbinsäure oder Polyalkylenpolyaminen eingesetzt. Hiermit wird im allgemeinen eine deutliche Erniedrigung der Polymerisationstemperatur erzielt.

Zur Regelung des Molekulargewichts der Polymeren können übliche Regler eingesetzt werden wie z.B. n-Dodecylmercaptan, t-Dodecylmercaptan, Diisopropylxanthogendisulfid, Di(methylentrimethylolpropan)xanthogendisulfid und Thioglykol. Ebenso ist der Einsatz von allylischen Verbindungen wie z.B. dem Dimeren von α-Methylstyrol möglich. Sie werden in Mengen von höchstens 3 Gew.-%, bezogen auf das Monomergemisch, zugegeben.

Nach beendeter Polymerisation werden die in wäßriger Dispersion vorliegenden Polymerisate gegebenenfalls mit Neutralisationsmittel bis zu Neutralisationsgraden von 10 bis 150 % (rechnerisch), vorzugsweise 30 bis 100 %, versetzt. Hierzu werden als Neutralisationsmittel anorganische Basen, Ammoniak oder Amine zugesetzt. Als anorganische Basen können z.B. Natriumhydroxid, Kaliumhydroxid, als Amine neben Ammoniak Trimethylamin, Triethylamin, Dimethylethanolamin, Methyldiethanolamin, Triethanolamin etc. eingesetzt werden. Die Neutralisationsmittel können sowohl im stöchiometrischen Unter- als auch Überschuß eingesetzt werden.

Insbesondere bei Verwendung eines stöchiometrischen Überschusses an Neutralisationsmittel ist jedoch darauf zu achten, daß durch den Polyelektrolytcharakter der Polymeren eine deutliche Viskositätszunahme erfolgen kann.

Eventuell zugesetzte Colösungsmittel können in der wäßrigen Dispersion in Mengen bis zu ca. 20 Gew.-%, bezogen auf die wäßrige Phase, verbleiben. Die Colösemittel können aber auch nach Bedarf im Anschluß an die Polymerisation destillativ entfernt werden.

Die Polymerdispersionen a1) und a2) besitzen im allgemeinen Feststoffgehalte von 20 bis 60 Gew.-%, vorzugsweise 30 bis 50 Gew.-%, und Viskositäten von 10 bis 10⁵, vorzugsweise 10 bis 10⁴ mPa.s bei 23°C und pH-Werte von 5 bis 10, vorzugsweise 6 bis 9. Sie werden bevorzugt in Gewichtsverhältnissen von 10:90 bis 60:40 (Festharze a1:a2) gemischt.

Die mittleren Teilchendurchmesser jeder in der Dispersion einzeln vorliegenden Komponente (gemessen mittels Laserkorrelationsspektroskopie) liegen im allgemeinen zwischen 50 und 500 nm, bevorzugt von 80 bis 250 nm.

Bei der Polyisocyanatkomponente b) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente b) weist bei 23°C im allgemeinen eine Viskosität von höchstens 10.000, vorzugsweise höchstens 1.000 mPa.s auf. Besonders bevorzugt handelt es sich bei der Polyisocyanatkomponente b) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von höchstens 500 mPa.s.

Gegebenenfalls können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird so bemessen, daß in den letztendlich erhaltenen erfindungsgemäßen Beschichtungsmitteln bis zu 20 Gew.-% Lösungsmittel, bezogen auf die Menge an Wasser, vorliegt, wobei auch das gegebenenfalls in den Polymerisatdispersionen oder - lösungen noch vorliegende Lösungsmittel mit in die Berechnung eingeht. Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Als Komponente b) geeignete Polyisocyanate sind insbesondere die sogenannten "Lackpolyisocyanate" mit aromatisch oder (cyclo)aliphatisch gebundenen Isocyanatgruppen, wobei die letztgenannten aliphatischen Polyisocyanate, wie bereits ausgeführt, besonders bevorzugt sind.

Ganz besonders bevorzugt sind Polyisocyanate mit (teil)hydrophiliertem Charakter.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis-(isocyanatocyclohexyl)-methan, insbesondere solche, welche ausschließlich auf Hexamethylendiisocyanat basieren.

Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende Biuretgruppen aufweisende Polyisocyanate auf Basis von Hexamethylendiisocyanat, wie sie beispielsweise nach den Verfahren der US-A 3 124 605, 3 358 010, 3 903 126, 3 903 127 oder 3 976 622 erhalten werden können, und die aus Gemischen von N,N',N"-Tris-(6-isocyanatohexyl)-biuret mit untergeordneten Mengen an seinen höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdionund/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von höchstens 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluß an ihre Herstellung vorzugsweise destillativ von überschüssigen monomeren Diisocyanaten befreit worden sind.

Als Vernetzerkomponente für die erfindungsgemäßen Bindemitteldispersionen können beliebige wasserdispergierbare Polyisocyanate mit aliphatisch, cycloaliphatisch, araliphatisch und/oder aromatisch gebundenen Isocyanatgruppen zum Einsatz kommen.

Geeignet sind beispielsweise ionische modifizierte, z.B. Carboxylatgruppen und gegebenenfalls Polyethereinheiten enthaltende Polyisocyanate der in der EP-A 510 438 und EP-A 548 669 genannten Art, Sulfonatgruppen enthaltende Polyisocyanate der in der EP-A 703 255 genannten Art oder Phosphat- bzw. Phosphonatgruppen enthaltende Polyisocyanate, wie sie in der WO 97/31960 beschrieben sind.

Bevorzugt finden als Vernetzerkomponenten für die erfindungsgemäßen Bindemitteldispersionen jedoch rein nichtionische, durch Umsetzung mit Polyethylenoxidpolyetheralkoholen hydrophil modifizierte Polyisocyanate Verwendung. Solche Polyisocyanate sind beispielsweise aus den EP-A 206 059, EP-A 516 277, EP-B 540 985, EP-A 645 410, EP-A 680 983, der US-PS 5 200 489 und der Deutschen Patentanmeldung 19822891.0 bekannt. Ebenfalls geeignete nichtionisch-hydrophilierte Polyisocyanate sind die in der EP-B 486 881 genannten, spezielle Emulgatoren aus Diisocyanaten und monofunktionellen Polyetheralkoholen enthaltenden Polyisocyanatzubereitungen.

Besonders bevorzugte wasserdispergierbare Polyisocyanate sind die oben genannten, mit Hilfe von Polyethylenoxidpolyetheralkoholen hydrophil modifizierten Polyisocyanate mit ausschließlich aliphatisch und/oder cycloaliphatisch gebundenen Isocyanatgruppen. Ganz besonders bevorzugt sind wasserdispergierbare Polyisocyanate der genannten Art mit Uretdion- und/oder Isocyanuratstruktur auf Basis von 1,6-Diisocyanatohexan (HDI), 1-Isocyanato-3,3,5-trimethyl-5-isocyanatomethylcyclohexan (Isophorondiisocyanat, IPDI), und/oder 4,4'-Diisocyanatodicyclohexylmethan.

Die Polyisocyanatkomponente b) kann im übrigen aus beliebigen Gemischen der beispielhaft genannten Polyisocyanate bestehen.

Zur Herstellung der gebrauchsfertigen Beschichtungsmittel wird die Polyisocyanatkomponente b) in der wäßrigen Dispersion der Polymerisate a) emulgiert, wobei das gelöste bzw. dispergierte Polymerisat gleichzeitig die Funktion eines Emulgators bzw. der Reaktivkomponente für das zugesetzte Polyisocyanat übernimmt.

Die Durchmischung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente b) und die alkoholischen Hydroxylgruppen der Komponente a) von 0,2:1 bis 5:1, vorzugsweise 0,5:1 bis 2:1, resultiert. Vor der Zugabe der Polyisocyanatkomponente b) können der Polymerisatkomponente a), d.h. der Dispersion bzw. Lösung der Polymerisate die üblichen Hilfs- und Zusatzmittel der Lacktechnologie einverleibt werden. Hierzu gehören beispielsweise Entschäumungsmittel, Verlaufhilfsmittel, Pigmente, Dispergiermittel für die Pigmentverteilung und dgl.

Erfindungsgemäß vernetzen die Polyolkomponenten mit den Polyisocyanaten derart, daß eine Fixierung der Elastomerphase und der Thermoplastphase (a2) erfolgt, wodurch eine zu weitgehende Durchmischung verhindert wird. Dies wird in den Beispielen an Hand der getrennt detektierbaren Glastemperaturen demonstriert.

Ein weiterer Gegenstand der Erfindung ist die Verwendung der erfindungsgemäßen Beschichtungsmittel. Sie eignen sich für praktisch alle Einsatzgebiete, in denen heute lösemittelhaltige, lösemittelfreie oder andersartige wäßrige Anstrich- und Beschichtungssysteme mit einem erhöhten Eigenschaftsprofil Verwendung finden, z.B. Beschichtung praktisch aller mineralischer Baustoff-Oberflächen wie Kalk- und/oder Zement-gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- und bitumenhaltiger Straßenbeläge; Lackierung und Versiegelung diverser Kunststoffoberflächen; Beschichtung von Leder und Textilien; außerdem sind sie zur flächigen Verklebung diverser Werkstoffe geeignet, wobei gleichartige und unterschiedliche Werkstoffe miteinander verbunden werden.

Besonders bevorzugt ist die Beschichtung von Kunststoffoberflächen. Hier sind Beschichtungssysteme mit erhöhter Schlagzähigkeit auch bei tiefen Temperaturen (bis - 20°C) und gleichzeitig guter Lösungs- und Chemikalienresistenz gefragt.

Die Härtung bzw. Vernetzung des Zweikomponenten-Systems kann nach Applikation auf dem jeweiligen Substrat bei Temperaturen von 5 bis 300°C, vorzugsweise zwischen Raumtemperatur und 200°C, erfolgen.

In den nachfolgenden Beispielen beziehen sich alle Prozentangaben auf Gewichtsprozente.

### Herstellung von Elastomerkomponenten a1)

### Beispiele A und B

In einem 3 l-Rührreaktor mit wirksamem Rührer, Rückflußkühler sowie Gaseinlaß und -auslaß werden die Vorlagen I (vgl. Tabelle 1) vorgelegt und mit Stickstoff gespült. Anschließend wird Stickstoff in einem stetigen Strom übergeleitet und die Vorlage unter Rühren bei ca. 200 U/min auf 80°C erwärmt. Anschließend werden die in Tabelle 1 angegebenen Monomermischungen II und die Initiatorlösungen III schnell zugegeben. Nach einer Reaktionszeit von 30 min werden die Monomermischungen IV und die Initiatorlösungen V im Verlauf von 4 h gleichmäßig zudosiert. Anschließend wird 2 h nachgerührt und danach mit den Initiatorlösungen VI nachaktiviert. Danach wird 4 h nachgerührt und bei leichtem Wasserstrahlvakuum von 200 bis 300 mbar ca. 50 ml eines Gemisches von Wasser und Restmonomeren destillativ entfernt. Anschließend wird auf Raumtemperatur abgekühlt und die Lösung VII zur Neutralisation zudosiert.

Die physikalisch-chemischen Kenndaten der wäßrigen Polymerisatdispersionen sind ebenfalls in Tabelle 1 aufgelistet.

**Tabelle 1**

| | **A** | **B** |
|---|---|---|
| I. Vorlage | | |
| Emulgator A* (80 %ig) | 25 g | - |
| Emulgator B** | - | 20 g |
| Ammoniak (25 %ig) | - | 5 g |
| entionisiertes Wasser | 800 g | 800 g |
| | | |

| II. Monomermischung für die Batchphase | | |
|---|---|---|
| Acrylsäure | 1 g | 1 g |
| Methacrylsäurehydroxypropylester | 8 g | 8 g |
| Acrylsäure-n-butylester | 88 g | - |
| Acrylsäure-2-ethylhexylester | - | 88 g |
| Methacrylsäureallylester | 1 g | 1 g |
| | | |

| III. Initiatorlösung für die Batchphase | | |
|---|---|---|
| Ammoniumperoxodisulfat | 0,5 g | 0,5 g |
| entionisiertes Wasser | 10 g | 10 g |
| | | |

| IV. Monomermischung für Zulaufphase | | |
|---|---|---|
| Acrylsäure | 9 g | 9 g |
| Methacrylsäurehydroxypropylester | 76 g | 76 g |
| Acrylsäure-n-butylester | 788 g | - |
| Acrylsäure-2-ethylhexylester | - | 788 g |
| Methacrylsäureallylester | 9 g | 9 g |
| | | |

| V. Initiatorlösung für Zulaufphase | | |
|---|---|---|
| Ammoniumperoxodisulfat | 3 g | 3 g |
| entionisiertes Wasser | 600 g | 600 g |
| | | |

| VI. Initiatorlösung für Nachaktivierung | | |
|---|---|---|
| Ammoniumperoxodisulfat | 1 g | 1 g |
| entionisiertes Wasser | 10 g | 10 g |
| | | |

| VII. Neutralisationslösung | | |
|---|---|---|
| 2-Dimethylaminoethanol | 8 g | 8 g |
| entionisiertes Wasser | 100 g | 100 g |
| | | |
| Feststoffgehalt (Gew.-%) | 38,9 | 40,4 |
| pH-Wert | 7,1 | 7,6 |
| Viskosität bei | | |
| D = 21,1 s⁻¹ (mPa.s) | <100 | 82 |
| mittlerer Teilchendurchmesser (nm) | 106 | 109 |
| Hydroxylgehalt (bez. Festharz) | | |
| [Gew. %] | 1,0 | 1,0 |
| Glastemperatur (nach der | | |
| DSC-Methode) (°C) | -37 | - |

| | | |
|---|---|---|
| * Emulgator A: Monoschwefelsäureester (Ammoniumsalz) eines Umsetzungsprodukts aus Dodekanol und Oligoethylenoxid | | |
| ** Emulgator B: Dodecylbenzolsulfonsäure | | |

### Beispiele C bis F

In einem 3 l-Rührreaktor mit wirksamem Rührer, Rückflußkühler sowie Gaseinlaß und -auslaß werden die Vorlagen I (vgl. Tabelle 2) vorgelegt und mit Stickstoff gespült. Anschließend wird Stickstoff in einem stetigen Strom übergeleitet und die Vorlage unter Rühren bei ca. 200 U/min. auf 80°C erwärmt. Anschließend werden die in Tabelle 2 angegebenen Monomermischungen II und die Initiatorlösungen III sehr schnell zugegeben. Nach einer Reaktionszeit von 30 min wird der Zulauf der Monomermischungen IV und der Initiatorlösungen V gestartet; IV wird in 2 h, V in 4 h gleichmäßig zudosiert. nach Beendigung des Zulaufs der Monomermischungen IV wird mit dem Zulauf der Monomermischungen VI begonnen; VI wird in 2 h gleichmäßig zudosiert. Anschließend wird 2 h nachgerührt und danach mit den Initiatorlösungen VII nachaktiviert. Danach wird 4 h nachgerührt. Dann wird auf Raumtemperatur abgekühlt und die Lösungen VIII zur Neutralisation zudosiert. Anschließend werden die Dispersionen filtriert und abgefüllt.

Die physikalisch-chemischen Kenndaten der wäßrigen Polymerisatdispersionen sind ebenfalls in Tabelle 2 aufgelistet.

**Tabelle 2**

| | **C** | **D** | **E** | **F** |
|---|---|---|---|---|
| I. Vorlage | | | | |
| Emulgator A | 12,5 g | 12,5 g | 12,5 g | 12,5 g |
| entionisiertes Wasser | 600 g | 600 g | 600 g | 600 g |
| | | | | |

| II. Monomergemisch (Batchphase) | | | | |
|---|---|---|---|---|
| Acrylsäure | 1 g | 1 g | - | - |
| Methacrylsäurehydroxypropylester | 8 g | 8 g | - | - |
| Acrylsäure-n-butylester | 88 g | 89 g | 94,7 g | 94,7 g |
| Methacrylsäureallylester | 1 g | - | - | - |
| Acrylsäure-2-hydroxyethylester | - | - | 3,3 g | 3,3 g |
| | | | | |

| III. Initiatorlösung (Batchphase) | | | | |
|---|---|---|---|---|
| Ammoniumperoxodisulfat | 0,5 g | 0,5 g | 0,5 g | 0,5 g |
| entionisiertes Wasser | 10 g | 10 g | 10 g | 10 g |
| | | | | |

| IV. Monomermischung I (Zulaufphase) | | | | |
|---|---|---|---|---|
| Methacrylsäurehydroxypropylester | 18,7 g | 18,7 g | - | - |
| Acrylsäure-n-butylester | 417,8 g | 422,3 g | 426 g | 426 g |
| Methacrylsäureallylester | 4,5 g | - | - | - |
| Acrylsäure-2-hydroxyethylester | - | - | 15 g | 15 g |
| Emulgator A | 6,25 g | - | - | - |
| | | | | |

| V. Initiatorlösung (Zulaufphase) | | | | |
|---|---|---|---|---|
| Ammoniumperoxodisulfat | 3 g | 3 g | 3 g | 3 g |
| Emulgator A | - | 12,5 g | 12,5 g | 12,5 g |
| entionisiertes Wasser | 700 g | 700 g | 700 g | 700 g |

| VI. Monomermischung II (Zulaufphase) | | | | |
|---|---|---|---|---|
| Methacrylsäurehydroxypropylester | 57,3 g | 58,3 g | - | - |
| Acrylsäure-n-butylester | 370,2 g | 373,7 g | 381,3 g | 347,3 g |
| Methacrylsäureallylester | 4,5 g | - | - | |
| Acrylsäure-2-hydroxyethylester | - | - | 49,7 g | 83,7 g |
| Acrylsäure | 9 g | 9 g | 10 g | 10 g |
| Emulgator A | 6,25 g | - | - | - |
| | | | | |

| VII. Initiatorlösung (Nachaktivierung) | | | | |
|---|---|---|---|---|
| Ammoniumperoxodisulfat | 1 g | 1 g | 1 g | 1 g |
| entionisiertes Wasser | 10 g | 10 g | 10 g | 10 g |
| | | | | |

| VIII. Neutralisationslösung | | | | |
|---|---|---|---|---|
| 2-Dimethylaminoethanol | 8 g | 8 g | - | - |
| Ammoniak (25 %ig) | - | - | 11 g | 16 g |
| entionisiertes Wasser | 100 g | 20 g | 20 g | 20 g |
| | | | | |
| Feststoffgehalt (Gew.-%) | 40,4 | 42,3 | 43,2 | 42,8 |
| pH-Wert | 7,8 | 6,7 | 7,3 | 7,1 |
| Viskosität bei | | | | |
| D = 21,1 s⁻¹ (mPa.s) | <100 | <100 | 305 | 380 |
| mittlerer Teilchendurchmesser (nm) | 101 | 219 | 104 | 212 |
| Säurezahl (mg KOH/g Lff) | 6,5 | 6,9 | 6,7 | 6,1 |

### Herstellung von Thermoplastkomponenten a2)

### Beispiele G

In einem 3 l-Rührreaktor mit wirksamem Rührer, Rückflußkühler sowie Gaseinlaß und -auslaß wird eine Vorlage aus 25 g 80 %igem Emulgator A und 450 g entionisiertem Wasser vorgelegt und mit Stickstoff gespült. Anschließend wird Stickstoff in einem stetigen Strom übergeleitet und die Vorlage unter Rühren bei ca. 200 U/min. auf 65°C erwärmt. Anschließend werden eine Monomermischung von 3 g Acrylsäure, 17 g Methacrylsäurehydroxypropylester, 50 g Methacrylsäuremethylester und 28 g Acrylsäure-n-butylester sowie eine Initiatorlösung von 0,5 g t-Butylhydroperoxid, 1 g einer 0,1 gew.-%igen Eisensulfatlösung (mit 2 Gew.-% Trilon B) und 4 g entionisiertem Wasser sowie eine Reduktionsmittellösung von 0,3 g Rongalit C (Natriumsalz der Formamidinsulfinsäure) und 5 g entionisiertem Wasser schnell zugegeben. Nach einer Reaktionszeit von 30 min werden eine weitere Monomermischung von 27 g Acrylsäure, 152 g Methacrylsäurehydroxypropylester, 450 g Methacrylsäuremethylester und 253 g Acrylsäure-n-butylester sowie eine Initiatorlösung von 3,5 g t-Butylhydroperoxid, 7,2 g der oben genannten Eisensulfatlösung und 393 g entionisiertem Wasser sowie eine Reduktionsmittellösung von 2 g Rongalit C und 400 g entionisiertem Wasser innerhalb von 4 h gleichmäßig zudosiert. Danach wird 2 h nachgerührt, dann auf 45°C abgekühlt und mit einer Initiatorlösung von 1 g t-Butylhydroperoxid, 2 g der oben genannten Eisensulfalösung und 3 g entionisiertem Wasser sowie einer Reduktionsmittellösung von 0,7 g Rongalit C und 5 g entionisiertem Wasser nachaktiviert. Dann wird 4 h bei 45°C nachgerührt und anschließend bei leichtem Wasserstrahlvakuum von 200 bis 300 mbar ca. 50 ml eines Gemisches von Restmonomeren und Wasser destillativ entfernt. Anschließend wird auf Raumtemperatur abgekühlt und mit einer wäßrigen Lösung von 16 g einer 25 gew.-%igen Lösung von Ammoniak und 100 g entionisiertem Wasser neutralisiert.

Die physikalisch-chemischen Kenndaten der wäßrigen Polymerisatdispersionen lauten:

| | |
|---|---|
| Feststoffgehalt (Gew.-%) | 41,6 |
| pH-Wert | 7,5 |
| Viskosität bei RT und D = 21,1 s⁻¹ (mPa.s) | 2300 |
| mittlerer Teilchendurchmesser (LKS) (nm) | 96 |
| Glastemperaturen (nach der DSC-Methode) (°C) | + 55°C |

### Beispiel H (Kern-Schale-Aufbau)

In einem 3 l-Rührreaktor mit wirksamem Rührer, Rückflußkühler sowie Gaseinlaß und -auslaß wird eine Vorlage aus 12,5 g 80 %igem Emulgator A und 700 g entionisiertem Wasser vorgelegt und mit Stickstoff gespült. Anschließend wird Stickstoff in einem stetigen Strom übergeleitet und die Vorlage unter Rühren bei ca. 200 U/min. auf 80°C erwärmt. Anschließend werden eine Monomermischung von 3 g Acrylsäure, 17 g Methacrylsäurehydroxypropylester, 50 g Methacrylsäuremethylester und 28 g Acrylsäure-n-butylester sowie eine Initiatorlösung von 0,5 g Ammoniumperoxodisulfat und 25 g entionisiertem Wasser schnell zugegeben. Nach einer Reaktionszeit von 30 min werden eine weitere Monomermischung von 37 g Methacrylsäurehydroxypropylester, 404 g Methacrylsäuremethylester und 6,25 g 80 %igem Emulgator A in 2 h sowie eine Initiatorlösung von 3 g Ammoniumperoxodisulfat und 600 g entionisiertem Wasser in 4 h gleichmäßig zudosiert. Sofort nach Dosierende der Monomermischung wird mit der Dosierung einer weiteren Monomermischung von 27 g Acrylsäure, 115 g Methacrylsäurehydroxypropylester, 46 g Methacrylsäuremethylester, 253 g Acrylsäure-n-butylester und 6,25 g 80 %igem Emulgator A begonnen. Die Dosierung dieser Monomermischung erfolgt in 2 h. Anschließend wird 2 h nachgerührt und danach mit einer Initiatorlösung von 0,5 g Ammoniumperoxodisulfat und 10 g entionisiertem Wasser nachaktiviert. Dann wird 4 h nachgerührt, auf Raumtemperatur abgekühlt und mit einer wäßrigen Lösung von 16 g 25 gew.-%igem Ammoniak und 20 g entionisiertem Wasser neutralisiert. Danach wird filtriert und abgelassen.

Die physikalisch-chemischen Kenndaten der wäßrigen Polymerisatdispersionen lauten:

| | |
|---|---|
| Feststoffgehalt (Gew.-%) | 41,4 |
| pH-Wert | 6,9 |
| Viskosität bei RT und D = 21,1 s⁻¹ (mPa.s) | <100 |
| mittlerer Teilchendurchmesser (LKS) (nm) | 112 |
| Säurezahl (mg KOH/g Lff) | 12,8 |
| Leitfähigkeit (mS/cm) | 5,94 |
| Glastemperaturen (nach der DSC-Methode) (°C) | 16,5 |

### Polyisocyanat 1

1,0 Val eines Isocyanuratgruppenhaltigen Polyisocyanates auf Basis von 1,6-Diisocyanatohexan (HDI) mit einem NCO-Gehalt von 21,5%, einer mittleren NCO-Funktionalität von ca. 3,8 und einer Viskosität von 3000 mPa.s (23°C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein praktisch farbloses klares Polyisocyanatgemisch vor. Der NCO-Gehalt beträgt 17,3 %, der Gehalt an Ethylenoxideinheiten beträgt 11,3 % und die Viskosität 3050 mPa.s (23°C).

### Anwendungsbeispiele

### Beispiele 1 und 2

77,1 Gew.-Teile der Elastomerkomponente A (entspricht 30 Teilen Festharz) wurden intensiv mit 168,3 Gew.-Teilen Thermoplastkomponente G (entspricht 70 Teilen Festharz) vermischt (5 min mit Ultra-Turrax) und mit 11 Gew.-Teilen Wasser verdünnt. Anschließend wurden 10,1 Gew.-Teile Polyisocyanat 1 zugegeben und intensiv vermischt (5 min mit Ultra-Turrax). Anschließend werden Filme auf Glasplatten bzw. auf Polypropylenplatten für freie Filme mit Trockenschichtdicken von 80 bis 120 µm blasenfrei gespritzt und 1 h bei Raumtemperatur, 0,5 h bei 80°C und 16 h bei 60°C sowie 1 Tag im Normklima konditioniert.

Die durchgeführten Zugversuche an freien Lackfilmen ermöglichen eine Vorhersage zum Einfluß eines auf Kunststoff applizierten Lackes auf das Zähigkeitsverhalten des lackierten Kunststoffteils. Diese Vorhersage beruht auf folgenden Erfahrungen:

Die Schlagzähigkeit von Kunststoffen wird in der Regel durch eine Lackierung beeinträchtigt, weil ein Riß in der Lackierung aufgrund seiner Kerbwirkung einen Bruch im Kunststoffteil auslösen kann. Dies führt dazu, daß lackierte Kunststoffteile im biaxialen Durchstoßversuch nach DIN 53 443 eine geringere Arbeitsaufnahme aufweisen als unlackierte Kunststoffe. Insbesondere bei tiefen Temperaturen kann die rißauslösende Wirkung der Lackierung so weit gehen, daß ein zähes Bruchverhalten des Kunststoffes durch die Lackierung in ein sprödes Bruchverhalten mit geringer Arbeitsaufnahme umschlägt.

Ein duktiles Bruchverhalten im Zugversuch an freien Lackfilmen korreliert erfahrungsgemäß mit einer geringen Beeinträchtigung der Schlagzähigkeit von Kunststoffen durch die entsprechende Lackierung. Als Maßzahl für eine geringe Beeinträchtigung der Schlagzähigkeit von Kunststoffen hat sich die Reißdehnung der freien Lackfilme bewährt. Je höher die Reißdehnung des freien Lackfilmes ist, desto geringer ist die Beeinträchtigung der Schlagzähigkeit von Kunststoffen durch die entsprechende Lackierung.

Weiterhin wurden an freien Lackfilmen dynamisch-mechanische Zugversuche (DMA) zum Glasübergangsverhalten durchgeführt. Anhand der Maxima des Verlustmoduls E" in Abhängigkeit von der Temperatur wurden jeweils zwei Glasübergänge und damit die Zweiphasigkeit der Lacke nachgewiesen.

An Filmen auf Glasplatten wurden die Beständigkeiten gegen Chemikalien sowie die Pendelhärten nach König bestimmt. Folgende Ergebnisse (vergl. Tabelle 3) wurden erhalten:

**Tabelle 3**

| Anwendungstechnische und physikalisch-chemische Kenndaten des 3K-PUR-Systems Polyol A + Polyol G (3:7) / Polyisocyanat 1 (NCO : OH = 1,4) | |
|---|---|
| Filmschichtdicke (Glasplatte) | 100 µm |
| Pendelhärte (nach König) | 111 s |
| | |
| Glastemperaturen (DMA-Messungen) | -28°C/+60°C |
| Reißfestigkeit (RT) (bei Schichtdicke 110µm) | 26,5 MPa |
| Reißdehnung (RT) (bei Schichtdicke 110 µm) | 25,4 % |
| Reißfestigkeit (-20°C) (bei Schichtdicke 110 µm) | 53,4 MPa |
| Reißdehnung (-20°C) (bei Schichtdicke 110 µm) | 7,1 %* |
| | |
| Teerfleckenbeständigkeit nach | |
| 1 h | 0** |
| 3 h | 0-1 |
| 8 h | 1 |
| 24 h | 2 |

| | |
|---|---|
| * eine einphasige Copolymerdispersion (gemäß EP-A 358 979) auf Acrylatbasis gehärtet mit einem allophanatisierten Polyisocyanat (gemäß EP-A 496 208 und EP-A 649 866) ergibt bei -20°C eine Reißdehnung von nur 3,4 % (Vergleichssystem 1) | |
| ** Benotungsskala: 0 : sehr gut beständig 5 : nicht beständig | |

Noch deutlicher treten die Unterschiede zwischen dem Vergleichssystem 1 (vergl. Tabelle 3) und dem Anwendungsbeispiel 1 bei Durchstoßversuchen nach DIN 53 443 an lackiertem Polybutylenterephthalat auf. Die Lackierung erfolgte auf Pocan® KU 7916/2, wobei zunächst ein Polyurethan-Metallic-Basislack (HMBC VP LS 2952) aufgetragen und anschließend mit den oben genannten wäßrigen 2K-PUR-Systemen als Klarlacke beschichtet wurde. Es wurde hierbei die Arbeitsaufnahme beim Bruch in Abhängigkeit von der Temperatur gemessen. Die Ergebnisse sind in Tabelle 4 aufgelistet.

**Tabelle 4**

| Versuchsergebnisse von Durchstoßversuchen bei verschiedenen Temperaturen (Prüfung auf Pocan® = Polybutylenterephthalat) | | |
|---|---|---|
| | Anwendungsbeispiel 1 | Vergleichsbeispiel 1 |
| Arbeitsaufnahme bei 23°C [J] | 73,8 | 68,4 |
| Bruchbild bei 23°C | zäh | zäh |
| Arbeitsaufnahme bei 0°C [J] | 103,5 | 14,2 |
| Bruchbild bei 0°C | zäh | zäh- spröd |
| Arbeitsaufnahme bei -20°C [J] | 26,7 | <10 |
| Bruchbild bei -20°C | zäh- spröd | spröd |

### Beispiele 2 und 3

Die in Tabelle 5 angegebenen Gewichtsteile der Elastomerkomponenten C bzw. D (entspricht 30 Teilen Festharz) werden intensiv mit 169,1 Gew.-Teilen der Thermoplastkomponente H (entspricht 70 Gew.-Teile Festharz) vermischt und mit 16 Gew.-Teilen Wasser verdünnt. Anschließend werden die in Tabelle 5 angegebenen Gew.-Teile Polyisocyanat 1 zugegeben und intensiv vermischt.

Anschließend werden Filme wie in Beispiel 1 hergestellt, konditioniert und anwendungstechnisch bzw. physikalisch-chemisch untersucht. Folgende Ergebnisse wurden erhalten.

**Tabelle 5**

| Anwendungstechnische und physikalisch-chemische Kerndaten der Beispiele 2 und 3 (NCO : OH = 1,0) | | |
|---|---|---|
| | Beispiel 2 | Beispiel 3 |
| Gew.-Teile Komponente C | 74,3 | - |
| Gew.-Teile Komponente D | - | 70,9 |
| Gew.-Teile Polyisocyanat 1 | 10,1 | 10,2 |
| Pendelhärte (nach König) (bei Filmschichtdicke [µm]) | 68 / (90) | 60 / (80) |
| Glastemperaturen (DMA-Messungen) | -31°C/+49°C | -36°C/+43°C |
| Reißfestigkeit (RT) [MPa] (bei Filmschichtdicke [µm] | 25,5 *l* (143) | 24,6 /102) |
| Reißdehnung (RT) [%] | 55,2 | 47,5 |
| Reißfestigkeit (0°C) [MPa] | 34,0 | 33,0 |
| Reißdehnung (0°C) [%] | 25,8 | 17,1 |
| Reißfestigkeit (-20°C) [MPa] | 45,4 | 45,8 |
| Reißdehnung (-20°C) [%] | 10,6 | 10,9 |
| | | |
| Teerfleckenbeständigkeit nach | | |
| 1 h | 0 | 0 |
| 8 h | 1 | 1 |
| 24 h | 2 | 2 |

Vergleicht man die vemetzte Elastomerkomponente C mit der unvemetzten Elastomerkomponente D, erkennt man keine signifikanten Unterschiede in den physikalisch-chemischen sowie den anwendungstechnischen Kenndaten der 2K-PUR-Systeme 2 und 3.

### Beispiele 4 und 5

Die in Tabelle 6 angegebenen Gewichts-Teile der Elastomerkomponenten D und F werden intensiv mit 168,7 Gew.-Teilen der Thermoplastkomponente H (entspricht 70 Gew.-Teile Festharz) vermischt und mit 11 Gew.-Teilen Wasser verdünnt. Anschließend werden die in Tabelle 6 angegebenen Gew.-Teile Polyisocyanat 1 zugegeben und intensiv vermischt. Anschließend werden Filme wie in Beispiel 1 hergestellt, konditioniert und mit denselben Methoden anwendungstechnisch bzw. physikalisch-chemisch untersucht. Folgende Ergebnisse wurden erhalten.

**Tabelle 6**

| Anwendungstechnische und physikalisch-chemische Kerndaten der Beispiele 4 und 5 (NCO : OH = 1,4) | | |
|---|---|---|
| | Beispiel 4 | Beispiel 5 |
| Gew.-Teile Komponente D | 70,9 | - |
| Gew.-Teile Komponente F | - | 70,1 |
| Gew.-Teile Polyisocyanat 1 | 14,3 | 15,6 |
| Pendelhärte (nach König) [s] | 35 / (135) | 37 / (120) |
| Glastemperaturen (DMA-Messungen) | -41 °C / +46°C | -44°C / +47°C |
| Reißfestigkeit (RT) [MPa] | 20,9 / (164) | 25,4 / (134) |
| Reißdehnung (RT) [%] | 31,9 | 29,7 |
| Reißfestigkeit (0°C) [MPa] | 33,4 | 34,5 |
| Reißdehnung (0°C) [%] | 14,2 | 11,4 |
| Reißfestigkeit (-20°C) [MPa] | 42,7 | 43,9 |
| Reißdehnung (-20°C) [%] | 8,6 | 9,2 |
| | | |
| Teerfleckenbeständigkeit nach | | |
| 1 h | 1 | 0 |
| 3 h | 3 | 1 |
| 8 h | 3 | 1 |
| 24 h | 3 | 3 |

In bezug auf die Eigenschaften als thermoplastische Elastomere verhalten sich die Systeme 4 und 5 sehr ähnlich. System 5 weist jedoch eine deutlich bessere Teerfleckenbeständigkeit auf.

## Patentansprüche

1. Zweikomponenten-Polyurethan-Beschichtungsmittel enthaltend
a) eine wässrige Vinylpolymerpolyol-Lösung oder -Dispersion aus mindestens
a1) einem Vinylpolymerisat mit einem zahlenmittleren Molekulargewicht Mₙ von 500 - 500.000 g/mol, einer Hydroxylzahl von 8 - 264 mg KOH/g Festharz, einer Säurezahl von 0 - 100 mg KOH/g Festharz und einer Glastemperatur ≤ -10°C hergestellt aus olefinisch ungesättigten Monomeren, die Hydroxyl-, Sulfonat- und/oder Carboxylatgruppen und gegebenenfalls Sulfonsäure- und/oder Carboxylgruppen enthalten
und
a2) einem Vinylpolymerisat mit einem zahlenmittleren Molekulargewicht Mₙ von 500 - 500.000 g/mol, einer Hydroxylzahl von 16 - 264 mg KOH/g Festharz, einer Säurezahl von 3 - 100 mg KOH/g Festharz und einer Glastemperatur ≥ +10°C hergestellt aus olefinisch ungesättigten Monomeren, die Hydroxyl-, Sulfonat- und/oder Carboxylatgruppen und gegebenenfalls Sulfonsäure- und/oder Carboxylgruppen enthalten,
sowie
b) eine Polyisocyanatkomponente mit einer Viskosität von höchstens 10 000 mPas bei 23°C,
**dadurch gekennzeichnet, dass**
• a1) in a2) als diskrete Phase vorliegt,
• a1) und a2) vor der Vernetzung mit der Isocyanatkomponente b) chemisch nicht miteinander verknüpft sind,
• b) in a) emulgiert oder solubilisiert ist und
• die Mengen von a) und b) so gewählt sind, dass NCO/OH-Äquivalentverhältnis 0,2 : 1 bis 5 : 1 beträgt.

2. Verfahren zur Herstellung der Zweikomponenten-Polyurethan-Beschichtungsmittel gemäß Anspruch 1, bei dem die Polyisocyanat-Komponente b) in der wässrigen Polyolkomponente a), die optional als Hilfs- und Zusatzmittel Entschäumungsmittel, Verlaufshilfsmittel, Pigmente und/oder Dispergierhilfsmittel für die Pigmentverteilung enthält, emulgiert wird und die Mengen von a) und b) so gewählt sind, dass ein NCO/OH-Äquivalentverhältnis 0,2 : 1 bis 5 : 1 vorliegt.

3. Verwendung der Zweikomponenten-Polyurethan-Beschichtungsmittel gemäß Anspruch 1 zur Beschichtung von Substraten.

4. Zweikomponenten-Polyurethan-Beschichtungsmittel gemäß Anspruch 1, **dadurch gekennzeichnet, dass** es sich bei der Polyisocyanatkomponente b) um ein hydrophiliertes Polyisocyanat handelt.

5. Zweikomponenten-Polyurethan-Beschichtungsmittel gemäß Anspruch 1, **dadurch gekennzeichnet, dass** es sich bei der Polyisocyanatkomponente b) um ein hydrophiliertes Polyisocyanat handelt, dessen Hydrophilierung mit monofunktionellen Polyethern aus Ethylenoxid erfolgt.

6. Zweikomponenten-Polyurethan-Beschichtungsmittel gemäß Anspruch 1, **dadurch gekennzeichnet, dass** es sich bei der Komponente a1) um ein Kem-Schale-Polymerisat mit hydrophobem Kern und hydrophiler Schale handelt.

7. Zweikomponenten-Polyurethan-Beschichtungsmittel gemäß Anspruch 1, **dadurch gekennzeichnet, dass** es sich bei der Komponente a2) um ein Kern-Schale-Polymerisat mit hydrophobem Kern und hydrophiler Schale handelt.

## Claims

1. Two-component polyurethane coating compositions comprising
a) an aqueous vinyl polymer polyol solution or dispersion comprising at least
a1) one vinyl polymer having a number-average molecular weight Mₙ of 500-500 000 g/mol, a hydroxyl number of 8-264 mg KOH/g solid resin, an acid number of 0-100 mg KOH/g solid resin and a glass transition temperature ≤ -10°C, prepared from olefinically unsaturated monomers containing hydroxyl, sulphonate and/or carboxylate groups and optionally sulphonic acid groups and/or carboxyl groups
and
a2) one vinyl polymer having a number-average molecular weight Mₙ or 500-500 000 g/mol, a hydroxyl number of 16-264 mg KOH/g solid resin, an acid number of 3-100 mg KOH/g solid resin and a glass transition temperature ≥ +10°C, prepared from olefinically unsaturated monomers containing hydroxyl, sulphonate and/or carboxylate groups and optionally sulphonic acid groups and/or carboxyl groups,
and also
b) a polyisocyanate component having a viscosity of at the most 10 000 mPas at 23°C,
**characterized in that**
• a1) is present in a2) as discrete phase,
• a1) and a2) prior to crosslinking with the isocyanate component b) are not chemically linked to one another,
• b) is emulsified or solubilized in a) and
• the amounts of a) and b) are chosen such that NCO/OH equivalent ratio is from 0.2:1 to 5:1.

2. Process for producing the two-component polyurethane coating compositions according to Claim 1, which comprises emulsifying the polyisocyanate component b) in the aqueous polyol component a), which optionally as auxiliaries and additives comprises defoamers, flow assistants, pigments and/or dispersing auxiliaries for pigment dispersing, and the amounts of a) and b) are chosen such that there is an NCO/OH equivalent ratio of from 0.2:1 to 5:1.

3. Use of the two-component polyurethane coating compositions according to Claim 1 for coating substrates.

4. Two-component polyurethane coating compositions according to Claim 1, **characterized in that** the polyisocyanate component b) is a hydrophilicized polyisocyanate.

5. Two-component polyurethane coating compositions according to Claim 1, **characterized in that** the polyisocyanate component b) is a hydrophilicized polyisocyanate rendered hydrophilic with monofunctional polyethers prepared from ethylene oxide.

6. Two-component polyurethane coating compositions according to Claim 1, **characterized in that** component a1) is a core-shell polymer having a hydrophobic core and a hydrophilic shell.

7. Two-component polyurethane coating compositions according to Claim 1, **characterized in that** component a2) is a core-shell polymer having a hydrophobic core and a hydrophilic shell.

## Revendications

1. Produit de revêtement du type polyuréthanne à deux composants contenant
a) une solution ou dispersion aqueuse de polyols consistant en polymères vinyliques, contenant au moins
a1) un polymère vinylique ayant un poids moléculaire moyen, moyenne en nombre, Mₙ, de 500 à 500 000 g/mol, un indice d'hydroxyle de 8 à 264 mg de KOH/g de résine solide, un indice d'acide de 0 à 100 mg de KOH/g de résine solide et une température de transition du second ordre ≤ -10°C, préparé à partir de monomères à insaturation oléfinique contenant des groupes hydroxy, sulfonate et/ou carboxylate et le cas échéant des groupes acide sulfonique et/ou carboxyle
et
a2) un polymère vinylique ayant un poids moléculaire moyen, moyenne en nombre, Mₙ de 500 à 500 000 g/mol, un indice d'hydroxyle de 16 à 264 mg de KOH/g de résine solide, un indice d'acide de 3 à 100 mg de KOH/g de résine solide et une température de transition du second ordre ≥ +10°C, préparé à partir de monomères à insaturation oléfinique contenant des groupes hydroxy, sulfonate et/ou carboxylate et le cas échéant des groupes acide sulfonique et/ou carboxyle
et
b) un composant polyisocyanate ayant une viscosité maximale de 10 000 mPa.s à 23°C,
**caractérisé en ce que**
- a1) est à l'état de phase séparée dans a2),
- a1) et a2) n'ont pas été combinés chimiquement entre eux avant la réticulation par le composant isocyanate b),
- b) est émulsionné ou dissous dans a) et
- les quantités de a) et b) correspondent à un rapport de 0,2:1 à 5:1 entre les équivalents de groupes NCO et les équivalents de groupes OH.

2. Procédé pour la préparation du produit de revêtement du type polyuréthanne à deux composants selon la revendication 1, dans lequel on émulsionne le composant polyisocyanate b) dans le composant polyol aqueux a), contenant le cas échéant les produits auxiliaires et additifs : agents antimousse, produits auxiliaires d'étalement, pigments et/ou produits auxiliaires dispersants pour les pigments, et on règle les quantités de a) et b) de manière à parvenir à un rapport de 0,2:1 à 5:1 entre les équivalents de groupes NCO et les équivalents de groupes OH.

3. Utilisation du produit de revêtement du type polyuréthanne à deux composants selon la revendication 1 pour le revêtement de supports.

4. Produit de revêtements du type polyuréthanne à deux composants selon la revendication 1, **caractérisé en ce que** le composant polyisocyanate b) est un polyisocyanate hydrophilisé.

5. Produit de revêtement du type polyuréthanne à deux composants selon la revendication 1, **caractérisé en ce que** le composant polyisocyanate b) est un polyisocyanate hydrophilisé dont l'hydrophilisation a été réalisée à l'aide de polyéthers monofonctionnels de l'oxyde d'éthylène.

6. Produit de revêtement du type polyuréthanne à deux composants selon la revendication 1, **caractérisé en ce que** le composant a1) est un polymère à noyau-enveloppe, à noyau hydrophobe et enveloppe hydrophile.

7. Produit de revêtement du type polyuréthanne à deux composants selon la revendication 1, **caractérisé en ce que** le composant a2) consiste en un polymère à noyau-enveloppe, à noyau hydrophobe et enveloppe hydrophile.
